# EUROPEAN PATENT APPLICATION

(11) **EP 1 370 088 A1**
(43) Date of publication of application: **10.12.2003**
(21) Application number: 02012739.5
(22) Date of filing: 07.06.2002
(51) Int. Cl.: H04N 9/31, G02B 27/28

(54) **An optical path struction of a liquid crystal projector**

(71) Applicant: Chromagic Technologies Corporation, Taoyuan Hsian (TW)
(72) Inventor: Mao, Chien-Chung, Taoyuan, Hsien (TW)
(74) Representative: Viering, Jentschura & Partner

(57) **Abstract**

An optical path struction of a liquid crystal projector comprises an emitting source unit, a polarized light reflection unit, a light transmission unit and a color seperation and mixing unit ; said emitting source unit used to generate the light, said polarized light reflection unit used to split the light of the emitting source unit into the P polar light and the S polar light, which is provided with a polarized light beam splitter, said polarized light beam splitter fabricated by a X-prism in the shape of stairs,a layer of the polarized light beam splitting provided in said polarized light beam splitter to make the most effective use of the light,the light transmission unit used to arrange and transmit the light of the polarized light reflection unit, said color seperation and mixing unit used to seperate the light of said transmission unit into three primary colors to process and then project out after mixing.

## Description

### BACKGROUND OF THE INVENTION

### Description of the invention

### 1. Field of the invention

The present invention is related to an optical path struction of a liquid crystal projector, in particular, a optical path design which is by way of increasing the utility efficiency of the polarized light to strengthen the display effect of the liquid crystal projector.

### 2. DESCRIPTION OF THE PRIOR ART

Please read Fig. for reference, which is a work principle view of the conventional liquid crystal projector, the general conventional liquid crystal projector mainly comprising a light source 5, a polarizing optics 6, and a color seperation and mixing optics 7 ; said light source 5 used to provide the light which the projetor needs, said polarizing optics 6 receiving the light from the light source 5, and then the light slitted into the polarized light, said color seperation and mixing optics 7 used to slit the polarized light into three primary color lights which are respectively processed and then mixed into the monochromatic light and projected out by the lens 8.

Because the liquid crystal projector has to use the function of the polarized light, it is necessary to use said polarizing optics 6, said polarizing optics 6 splitting the light into the P polar light and the S polar light, wherein the P polar light is directly introduced into the color seperation and mixing optics 7 for use and the S polar light can't be used directly due to reflection,so that the ratio of actually using at last is very low, which cause the utility effect of the projector difficult to expect. To this end, how to make the most effective use of the polarized light is an item that the industry gives every effort to research and develop.

### SUMMARY OF THE INVENTION

An object of the present invention is to provide an optical path struction of a liquid crystal projector, which mainly enhances the separated and gathered effect of the polarized light to enable to enhance the utility rate of the light greatly to increase the work efficiency of the projector.

Another project of the present invention is to provide an optical path struction of a liquid crystal projector, the struction being light so as to get the maximum utility quantity of the light within the limited space and being adapted for the equipment of the projector which is increasingly light to increase the mobility and utility range of the projector.

An optical path struction of a liquid crystal projector which can reach the above objects of the invention comprises an emitting source unit, a polarized light reflection unit, a light transmission unit, a color seperation and mixing unit and an emitting projection unit. Said emitting source unit used to generate the light, said polarized light reflection unit used to split the light of the emitting source unit into the P polar light and the S polar light ; said polarized light reflection unit has a polarized light beam splitter, said polarized light beam splitter fabricated by a X-prism in the shape of stairs, and a layer of the polarized light beam splitting provided in said polarized light beam splitter to enable said polarized light beam splitter to process the great quantity of the light simultaneously to be helpful to use the projector ; said light transmission unit is used to arrange and transmit the light of the polarized light reflection unit, said color seperation and mixing unit used to split the light of said transmission unit into three primary colors to process and then project after mixing.

### BRIEF DESCRIPTION OF THE DRAWINGS

The drawings disclose an illustrative embodiment of the present invention which serves to exemplify the various advantages and objects hereof, and are as follows:

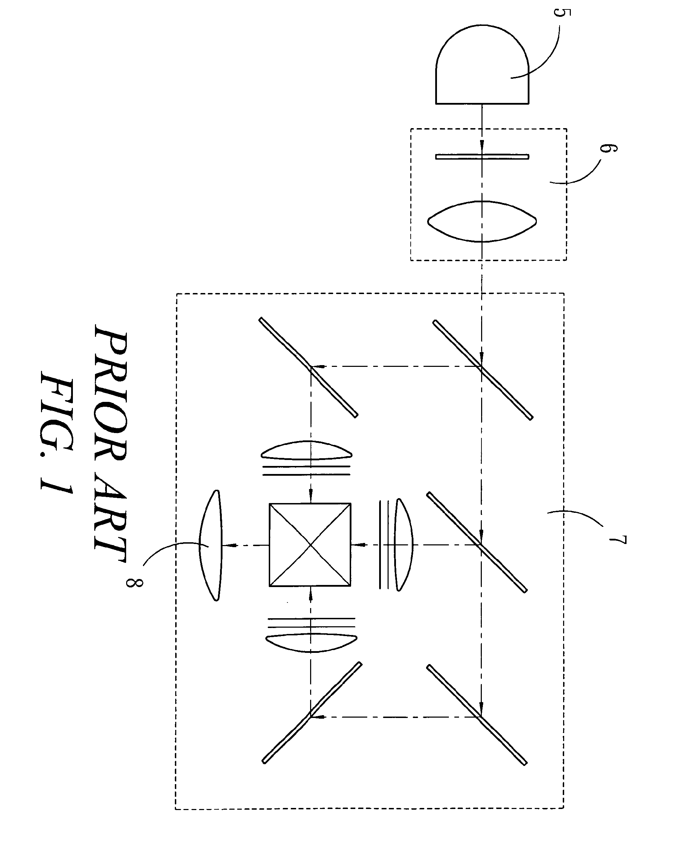

Figure 1 is the principle view of the optical path of the conventional liquid crystal projector ;
Figure2 shows the principle of the optical path in the present invention ; and
Figure3 is the structional schematic diagram of the polarized light beam splitter in the present invention.

### DETAILED DESCRIPTION OF THE PREFERRED EMBODIMENT

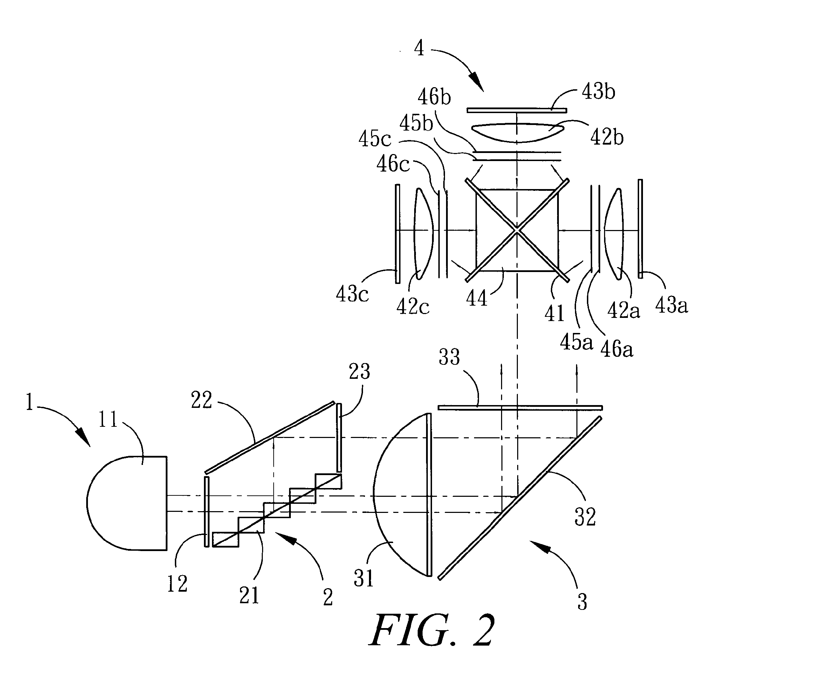

With reference to Figure2,the present invention provides an optical path struction of a liquid crystal projector, which mainly comprises an emitting source unit 1, a polarized light reflection unit 2, a light transmission unit 3, and a color seperation and mixing unit 4. Said emitting source unit 1 has a luminary 11, said luminary 11 used to generate the light source in order to prevent said luminary 11 from burning out, said luminary 11 provided with a fan nearby (not shown in the drawing), a filter 12 provided in the emission end of said luminary 11 ,said filter 12 used to filter the ultra-red rays or the ultraviolet rays in the light source in order to ensure the purity of the light source ; said polarized light reflection unit 2 have a polarized light beam splitter 21 which is used for splitting the light transmitted from the emitting source unit 1 into the P polar light and the S polar light, in which there is a mirror 22 provided in the direction of the S polar light and the reflection end of the mirror 22 is provided with a polarizing converter 23 for converting said S polar light into the P polar light that is transmitted together with the former P polar light at the same time ; said light transmission unit 3 has the first array of lens 31, a mirror 32, the second array of lens 33, the said first array of lens 31 used to receive the P polar light to increase the uniformity of the lighting area of the light ,which is then turn to the second array of lens 33 by the mirror 32 ,the transmitted-into light further emitted uniformly and parallel by the second array of lens 33 ; said color seperation and mixing unit 4 has a color seperation mirror 41, three field lens 42a,42b,42c, three liquid crystal panels 43a,43b,43c, a X-prism 44, three polarizing plates 45a,45b,45c, and three polarizing converters 46a,46b,46c, said color seperation mirror 41 used to separate the transmitted-into light into three primary color lights- red light, blue light, green light,which are respectively filtered into the monochromatic polarized lights by three polarizing plates 45a,45b,45c, the phases of the polarized lights further converted by three polarizing converters 46a,46b,46c, which are subsequently transmitted to the corresponding liquid crystal panels 43a,43b,43c by three field lens 42a,42b,42c,said liquid crystal panels 43a,43b,43c respectively performing the image-adjustment for three primary color lights,the three primary color light sources gathered to mix by the X-prism 44, the mixed light subsequently projected by the lens.

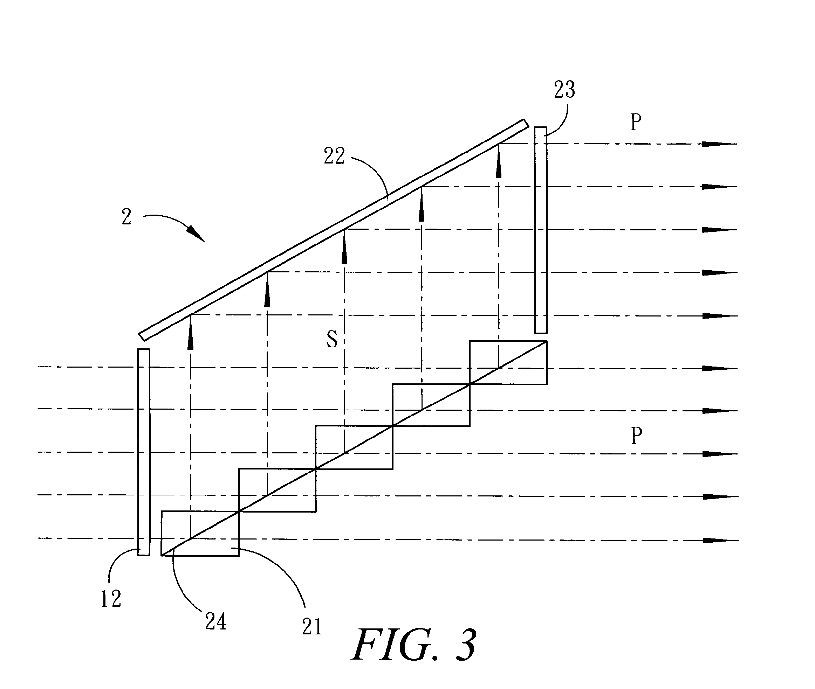

Please reading Fig. 3 for reference, said polarized light beam splitter 21 is mainly fabricated by the X-prism in the shape of stairs, which is provided with a layer of the polarized light beam splitting 24 inside, said layer of the polarized light beam splitting 24 splitting the transmitted-into light into the P polar light and the S polar light, wherein said P polar light directly passes through said layer of the polarized light beam splitting 24 to enter into color seperation and mixing unit 4, said S polar light turned to the position of the mirror 22 via the layer of the polarized light beam splitting 24, said polarizing converter 23 converting the S polar light into the P polar light for reuse to accomplish the function of splitting and getting together of the polarized light;because each face of each stair in said polarized light beam splitter 21 can process the transmitted-into light alone, a great quantity of light can be processed by the polarized light beam splitter 21 in the shape of stairs within the limited space so as to enhance greatly the utility effect of the projector.

Comparing with the conventional art, the whole module of the projecting engine of the projector provided by the present invention has the following advantages even more:
1. the present invention increasing the utility effect of the polarized light and also enhancing the entire power of the liquid crystal projector simultaneously to enable the projector to develop the maximum utility effect.
2. the present invention increasing the utility rate of the space to enable the volume of the liquid crystal projector to be decreased in the condition without effecting the function, so that the projector can be more easy to move to use and the range of use can be enhanced greatly .

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. An optical path structure of a liquid crystal projector comprising:
an emitting source unit used to generate the light ;
a polarized light reflection unit used to split the light of the emitting source unit into the P polar light and the S polar light, said polarized light reflection unit having a polarized light beam splitter, said polarized light beam splitter fabricated by a X-prism in the shape of stairs and provided with a layer of the polarized light beam splitting inside ;
a light transmission unit used to arrange and transmit the light of said polarized light reflection unit;
a color seperation and mixing unit used to split the light of said transmission unit into three primary colors to process and then project after mixing.

2. The optical path structure of the liquid crystal projector as recited in Claim 1, wherein said emitting source unit has a luminary, said luminary provided with a fan nearby to radiate heat, and the emission end of said luminary provided with a filter .

3. The optical path structure of the liquid crystal projector as recited in Claim 1, wherein a mirror is provided in the direction of the S polar light reflected by said polarized light beam splitter, a polarizing converter provided in the reflection end of said mirror to convert said S polar light into P polar light.

4. The whole module of the projecting engine of the projector as recited in Claim 1, wherein said light transmission unit comprises the first array of lens, a mirror, the second array of lens, the said first array of lens increasing the uniformity of the transmitted-into light which is subsequently turn by the mirror and then emitted uniformly by the second array of lens.

5. The whole module of the projecting engine of the projector as recited in Claim 1, wherein said color seperation and mixing unit comprises a color seperation mirror, three field lens, three liquid crystal panels, a X-prism, three polarizing plates, and three polarizing converters,said color seperation mirror separating the transmitted-into light into three primary colors of the color light, which are further filtered into the monochromatic polarized light through three polarizing plates respectively, the phase of the polarized light subsequently converted by three polarizing converters, and then the image adjusted by three field lens and the liquid crystal panel, three color light sources furthermore gathered by the X-prism to transmit.
